(19) Europäisches Patentamt / European Patent Office / Office européen des brevets

(11) **EP 4 095 773 A1**

(12) **EUROPEAN PATENT APPLICATION**
published in accordance with Art. 153(4) EPC

(43) Date of publication:
**30.11.2022 Bulletin 2022/48**

(21) Application number: **20915151.3**

(22) Date of filing: **22.04.2020**

(51) International Patent Classification (IPC):
***G06Q 10/06*** (2012.01)

(52) Cooperative Patent Classification (CPC):
**G06F 30/20; G06Q 10/06;** Y02P 80/10

(86) International application number:
**PCT/CN2020/086226**

(87) International publication number:
**WO 2021/147193 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **21.01.2020 CN 202010071981**

(71) Applicant: **Xiamen Etom Intell-Tech Group Co., Ltd Xiamen, Fujian 361000 (CN)**

(72) Inventors:
• LIU, Yu
  Xiamen, Fujian 361000 (CN)
• SUN, Zailian
  Xiamen, Fujian 361000 (CN)
• MEI, Yu
  Xiamen, Fujian 361000 (CN)

(74) Representative: **Loo, Chi Ching et al
Albright IP Limited
County House
Bayshill Road
Cheltenham, Gloucestershire GL50 3BA (GB)**

(54) **SIMULATION METHOD, SYSTEM, AND DEVICE FOR GENERATING OPERATIONAL BEHAVIOR RECORD SET**

(57)  A simulation method, system, and device for generating an operational behavior record set. Conventional operational behavior record sets usually are what that have actually taken place and have the shortcoming of a long accumulation cycle. The method performs simulations of basic work condition data and operational behavior data with respect to cases having calculatable evaluation data; evaluation data combined and calculated forms complete operational behavior records comprising the basic work condition data, operational data, and evaluation data; implemented is rapid accumulation of operational behavior records; with respect to specific landing scenarios in the fields of industry and services, implemented are offline accumulation, induction, and re-use of expert operational experiences and worker labor skills, thus implementing the transfer of the skills and the experiences between machines and the system, the system and people, the system and the machines, and machines and machines, achieving the goals of energy saving and consumption reduction, quality control, increasing efficiency, safe operations, and resource optimization, and at the same time solving for enterprises the challenges of highly skilled workers being difficult to train and retain and the imbalance of worker skills.

EP 4 095 773 A1

**Description**

BACKGROUND OF THE INVENTION

1. Technical Field

The present invention relates to the technical field of management systems, and in particular to a simulation method, system and device for generating an operational behavior record set.

2. Description of Related Art

The core of an operational behavior record management system is to accumulate the operating experience of human or machines in various situations, and to summarize the best experience to guide the operation of human or machines in such situations, so as to achieve the purpose of overall improvement. This process often requires a long period of online training and learning in order to obtain sufficient operational knowledge to guide daily optimization operations. This kind of online training is a big application challenge for application scenarios with few human operations.
The current operational behavior record management systems basically all require long-term online learning, and cannot solve the problem of obtaining new operational behavior records through offline self-learning of the systems for some application scenarios with specific conditions. As a result, the applications of the operational behavior record management systems are limited in some fields.

BRIEF SUMMARY OF THE INVENTION

The present invention provides a simulation method, system and device for generating an operational behavior record set. The operational behavior record management systems refer to application scenarios of a class of intelligent systems, and this class of operational behavior record management systems work out a "three types of data" theory and specific solutions for specific application scenarios in the industrial field and service field, and achieves offline accumulation, induction and reuse of experts' operating experience and workers' labor skills, and also achieves machine-system, system-human, system-machine, and machine-machine transfer of skills and experience, thereby reaching the objectives of energy saving, consumption reduction, quality control, efficiency improvement, safe operation, and resource optimization, and the like, and also solving the enterprise's problems of difficulty in cultivating high-skilled workers, high loss of high-skilled workers, and unbalance in workers' skills.
A simulation method for generating an operational behavior record set comprises:

establishing an optimization objective calculating model, wherein the model is based on known mapping relationships or association relationships with industry credibility, and evaluation data of optimization objectives are calculated from basic work condition data and operational data, and the evaluation data include values of the optimization objectives or constraining result values; specifically,
setting reasonable intervals for various dimensions of the basic work condition data, the operational data, and the evaluation data, and setting constraints for the basic work condition data, the operational data, and the evaluation data, wherein the constraints include the following options: computable conditions for the evaluation data; constraints among data of various dimensions of the basic work condition data and the operational data; and reasonable ranges of evaluation data limited by the basic condition data;
establishing an exit condition;
simulation: generating the basic work condition data and the operational data within reasonable intervals in an exhaustive manner, and calculating evaluation data through the mapping relationships or the association relationships; if the constraints are met and the evaluation data is superior to the evaluation data corresponding to other operational data under the same basic work condition data in a record, generating a new operational behavior record; and
repeating the simulation step until the exit condition is established.

In this application, the basic work condition data represent a class of factors that actually exist in the production process, such as external input, external environment, production plans, cannot be changed or are not suitable to be changed, and have an impact on the production process and results.
The operational data represents human intervention in the production process, such as machine configuration, worker's manipulation for devices and the like.
The evaluation data represents optimization objectives, such as energy saving, consumption reduction, quality control, efficiency improvement, safe operation, and resource optimization, such as: lower (direction) energy consumption (objective value); higher (direction) pass rate (objective value); higher (direction) yield of molten steel (objective value); lower (direction) ammonia escape rate (objective value); and shorter (direction) turnaround time (objective value).

Further, the constraints include compliance constraints, negative lists for operational data, and preconditions for the optimization objectives.

The compliance constraints refer to situations, in the evaluation data of various results caused by basic work condition data and operations, that violate national standards, affect product quality compliance, and have adverse effects on subsequent processes.

The negative lists for the operational data refer to dangerous operational behaviors that should be prohibited for reasons of equipment safety, personnel safety or other safety-related factors.

The precondition for the optimization objectives refers to reaching the optimization objectives by the system when the preconditions are met; for example, energy consumption is reduced on the precondition that the product quality reaches the standard.

Further, the basic work condition data and the operational data are generated in an exhaustive manner within reasonable intervals, that is, step values are set for various types of basic work condition data and operational data, and the basic work condition data and the operational data are generated in an exhaustive manner. The evaluation data corresponding to each group of basic work condition data and operational data are calculated. If the constraints are met and the evaluation data is superior to the evaluation data corresponding to other operational data under the same basic work condition data in the record, a new operational behavior record is generated.

Further, the exit condition includes exiting the simulation-based self-learning after completing all-state exhaustion.

Further, the basic work condition data and the operational data are generated randomly within reasonable intervals, and evaluation data are calculated through the mapping relationships or the association relationships. If the constraints are met and the evaluation data is superior to the evaluation data corresponding to other operational data under the same basic work condition in the record, a new operational behavior record is generated.

Further, the exit condition includes a situation where a coverage rate of the basic work condition data reaches a predetermined ratio.

A simulation system for generating an operational behavior record set, adopting the above-mentioned simulation method generating an operational behavior record set and comprising a basic work condition data generating module, an operational data generating module, and a data analysis module.

The basic work condition data generating module is configured to generate basic work condition data and transmit the basic work condition data to the data analysis module.

The operational data generating module is configured to generate operational data and transmit the operational data to the data analysis module.

The data analysis module is pre-stored with: reasonable intervals for various dimensions of the basic work condition data, the operational data, and the evaluation data; constraints for the basic work condition data, the operational data, and the evaluation data; self-learning exit conditions; and mapping relationships of the optimization objectives or association relationships with industry credibility among the basic work condition data, the operational data and the evaluation data of the optimization objectives.

The data analysis module is configured to exhaustively or randomly generate basic work condition data and the operational data within reasonable intervals and calculate the evaluation data through the mapping relationships or the association relationships, and to make a new operational behavior record if the constraints are met and the evaluation data is superior to the evaluation data corresponding to other operational data under the same basic work condition data in the record; and to repeat simulation-based self-learning until the exit condition is established.

Further provided is a simulation device for generating an operational behavior record set, adopting the above-mentioned simulation method and system for generating an operational behavior record set and comprising a basic work condition data generating unit, an operational data generating unit, and a data analysis unit.

The basic work condition data generating unit comprises various sensors for collecting data, and can generate basic work condition data and transmit the basic work condition data to the data analysis unit.

The operational data generating unit is configured to generate operational data and transmit the operational data to the data analysis unit.

The data analysis unit is pre-stored with: reasonable intervals for various dimensions of the basic work condition data, the operational data, and the evaluation data; constraints for the basic work condition data, the operational data, and the evaluation data; self-learning exit conditions; and mapping relationships of the optimization objectives or association relationships with industry credibility among the basic work condition data, the operational data and the evaluation data.

The data analysis unit is configured to exhaustively or randomly generate basic work condition data and the operational data within reasonable intervals, and calculate the evaluation data through the mapping relationships or the association relationships, and to make a new operational behavior record if the constraints are met and the evaluation data is superior to the evaluation data corresponding to other operational data under the same basic work condition data in the record; and to repeat simulation-based self-learning until the exit condition is established.

It can be seen from the above description of the present invention that, compared with the prior art, a simulation method, system and device for generating an operational behavior record set of the present invention have the following advantages.

1. The present invention does not rely on historical knowledge and online training, can solve the problem of few learning samples and improve reliability.

2. The present invention does not rely on historical knowledge and online training and can solve the problem of long learning cycle and reduce the time cost of online training.

3. The present invention can directly launch a system with complete training, establish an operation experience database with full coverage of work conditions and optimized objectives, and the system can be put into practice immediately once it is online.

## DETAILED DESCRIPTION OF THE INVENTION

In order to make the technical problems to be solved, technical solutions and advantages of the present invention more clear and more understandable, the present invention will be further described in detail below in conjunction with embodiments. It should be understood that specific embodiments described here are merely illustrative of the present invention rather than limiting it.

Example 1

A simulation method for generating operational behavior record set comprises the following steps.

In step S10, an optimization objective calculating model is established, wherein the model is based on known mapping relationships or association relationships with industry credibility, and evaluation data of the optimization objectives are calculated from basic work condition data and operational data, and the evaluation data include values of the optimization objectives or constraining result values.

In step S 20, reasonable intervals are set for various dimensions of the basic work condition data, the operational data, and the evaluation data, and constraints are set for the basic work condition data, the operational data, and the evaluation data, wherein the constraints include the following options: computable conditions for the evaluation data; constraints among data of various dimensions of the basic work condition data and the operational data; and reasonable ranges of evaluation data limited by the basic condition data.

Specifically, the constraints include compliance constraints, negative lists for operational data, and preconditions for the optimization objectives; the compliance constraints refer to situations, in the evaluation data of various results caused by basic operating condition data and operational data, that violate national standards, affect product quality compliance, and have adverse effects on subsequent processes; the negative lists for the operational data refer to dangerous operational behaviors that should be prohibited for reasons of equipment safety and personnel safety; the precondition for the optimization objectives refers to reaching the optimization objectives when the preconditions are met.

In step S30, an exit condition is established; for example the coverage rate of the basic work condition data reaches a predetermined ratio.

In step S40, the basic work condition data and the operational data are generated within reasonable intervals in an exhaustive manner, and values of the optimization objectives are calculated through the mapping relationships or the association relationships. If the constraints are met and the values of the optimization objectives are superior to the objective values corresponding to other operational data under the same basic work condition data in a record, a new operational behavior record is made.

In other embodiments, the random generation method of the basic work condition data and the operational data may be: generating the basic work condition data and the operational data in an exhaustive manner within reasonable intervals, that is, setting step values for various types of basic work condition data and operational data and generating the basic work condition data and the operational data in an exhaustive manner.

In step S50, step S40 is repeated until the exit condition is met.

Example 2

Example 1 is specifically applied to a simulation system for generating an operational behavior record set, including a basic work condition data generating module, an operational data generating module and a data analysis module, which are respectively configured to generate basic work condition data and operational data and carry out data analysis. The data analysis includes generating random data of the basic work condition data and the operational data, generating evaluation data and implementing self-learning.

Example 3

Example 1 is specifically applied to a simulation device for generating an operational behavior record set, including a basic work condition data generating unit, an operational data generating unit and a data analysis unit, which are respectively configured to collect basic work condition data and operational data and carry out data analysis. The data analysis includes generating random data of the basic work condition data and the operational data, generating evaluation data and implementing self-learning.

Example 4

Example 1 is specifically applied to a scenario of repair of engine blades in unbalance.

Dynamic unbalance correction for blades of an engine:

4th- and 9th-stage rotors of this engine include 68, 75, 82, 82, 80, and 76 blades, respectively. A dynamic unbalance machine can detect the magnitude and direction of unbalanced force on planes of the 4th- and 9th-stage rotors.
It is known that each rotor can be added with 1 patch (1.3g or 2g) for each blade. The rotor radius is 8.28 and 8.33 inches. The objective is to obtain a reasonable correction scheme, so that the rotor plane resultant force and the axial resultant force are less than set values.
Three types of data and constraints for a system for management of operational behavior records:

   1. Basic work condition data:
   The magnitude and direction of the unbalanced force on the planes of the 4th- and 9th-stage rotors detected by the dynamic unbalance machine
   2. Operational data:
   The placement scheme of patches on the 4th- and 9th-stage rotors
   3. Evaluation data:
   Optimization objectives and directions:

The dynamic unbalance machine tests results again, that is, the dynamically unbalanced force on the 4th- and 9th-stage rotors is less than 5g·in.
The correction scheme involving fewer rotors is preferred.
For correction schemes involving the same number of rotors, the one with a smaller total number of patches is preferred.

   4. Constraints:

The total weight of patches placed on a single rotor during a repair process is not greater than 10g.

The simulation process is as follows:

1. Establish a calculation model for evaluation data

Analysis of the problem:

   1) This issue is about force decomposition, the possibility of decomposition is huge, and its reasonable solution space is large too. At present, enterprises rely on estimations made by technicians on the basis of their experience, and usually more tests are required to meet the requirements.
   2) The resultant of force has a unique result. In other words, for any repair scheme, the direction and magnitude of the resultant force can be calculated through mechanical formulas, and the result is unique.

2. Set reasonable intervals for various dimensions of the three types of data

Basic condition data: the initial unbalanced force of the 4th- and 9th-stage rotors is 0 to 200 g/in, its accuracy is 1g·in, its direction is between 0 and 360 degrees, and its accuracy is 1 degree.
Operational data: number of blades added to the rotor: in the case of 6 rotors, 0 to 7 blades can be selected for each rotor, and 1 patch (1.3g or 2g) is placed on the selected blade.

Evaluation data: results obtained after repair, i.e. the projections of the resultant force on the 4th- and 9th-stage rotors.

Optimization objective and direction: the dynamically unbalanced force on the 4th- and 9th-stage rotors (the projections of the resultant force on the 4th- and 9th-stage rotors) are less than 5g·in; the correction scheme involving fewer rotors is preferred; For correction schemes involving the same number of rotors, the one with a smaller total number of patches is preferred.

3. Establish an exit condition: generate basic work condition data in an exhaustive manner.

4. Simulation-based self-learning

In step 1, initial imbalance detection values are set in an exhaustive manner.

In step 2, for the current initial unbalance detection values, the reasonable scheme counter is set to zero.

In step 3, a correction scheme is generated randomly.

In step 4, the direction and magnitude of the resultant force is calculated, and the projections of the resultant force on the planes of the 4th- and 9th-stage rotors are calculated; if the two projections are both less than 5g·in; the correction scheme is saved into the reasonable operation record set corresponding to the current initial imbalance detection values, and the reasonable scheme counter is increased by one

In step 5, if the reasonable scheme counter is less than 20, the process goes to step 3; otherwise, if the exhaustion does not end, the next initial unbalance detection value is taken and the process go to step 2; or if the exhaustion ends, the process goes to step 6.

In step 6, the simulation process ends.

Example 5

The solution of this application is applied to the pre-desulfurization of molten iron in the steelmaking process.

Three types of data of the system for management of operational behavior records:

Basic work condition data: molten iron temperature, molten iron weight, sulfur content of molten iron, and objective value of the sulfur content of molten iron after desulfurization

Operational data: injection volume of passivated magnesium and injection volume of passivated lime

Evaluation data: optimization objective: to achieve lower consumption of passive magnesium under the condition that the sulfur content of molten iron after desulfurization reaches the standard.

Constraints: the ratio of the injection volume of passivated magnesium to the injection volume of passivated lime is a set value.

Simulation process:

1. Establish a calculation model for evaluation data

1) Based on molten iron temperature
2) Evaluation indicator 1: formula for calculating the sulfur content after desulfurization

$$\text{Sulfur content (\%) after desulfurization} = \text{sulfur content (\%) before desulfurization} - \text{injection volume of passivated magnesium} / (\text{molten iron amount} * \text{unit consumption of passivated magnesium})$$

3) Evaluation indicator 2: optimization objective value - consumption of passivated magnesium

Notes:

1) Consumption of passivated magnesium = injection volume of passivated magnesium

2) The unit consumption of passivated magnesium refers to the injection volume of passivated magnesium required to reduce sulfur by 1% per ton of molten iron at the current temperature of molten iron, and this data can be obtained through experiments.

2. Set reasonable intervals for various dimensions of the three types of data

Basic work condition data:

| Data dimension | Data range | Precision |
|---|---|---|
| Molten iron temperature | 1210-1450°C | 10°C |
| Molten iron weight | 80-90t | 0.1t |
| Sulfur content of molten iron | 0.01 %-0.08% | 0.01% |
| Objective value of the sulfur content of molten iron after desulfurization | 10 commonly used objective values | 0.01% |

Operational data:

Injection volume of passivated magnesium; data range: 80-120 kg; precision: 1 kg.

The injection volume of passivated lime is calculated from the injection volume of passivated magnesium according to a specified ratio.

Evaluation data: sulfur content after desulfurization.

3. Establish an exit condition: the coverage rate of basic work condition data reaches 90% or above.

4. Simulation-based self-learning

In step 1, basic condition data and operational data are generated randomly.

In step 2, the sulfur content after desulfurization is calculated. If the sulfur content after desulfurization is less than the objective value of sulfur content after desulfurization, the basic work condition data, operational data, and objective data are added to the record set.

In step 3, if the coverage rate of the basic work condition data reaches 90% or above, the process goes to step 4; otherwise, the process goes to step 1.

In step 4, the simulation process ends.

Example 6

The solution of this application is applied to the electrostatic precipitator (ESP) of flue gas.

Three types of data of the system for management of operational behavior records:

Basic work condition data: inlet flue gas flow, inlet flue gas concentration, number of electromagnetic fields, and order of electromagnetic fields
Operational data: working state of a single electromagnetic field (secondary voltage, secondary current, power supply mode, and pulse frequency)

3. Evaluation data: outlet smoke concentration and total power of each electromagnetic field

Optimization objective: to achieve lower total power of each electromagnetic field under the condition that the outlet smoke concentration reaches the standard.

4. Constraints: the outlet smoke concentration is lower than the national standard.

Simulation process:

1. Establish a calculation model for evaluation data

ESP manufacturers can obtain the following empirical values through experiments:

1) The dust removal rate of a single electromagnetic field in various states (secondary voltage, secondary current, and pulse frequency)
2) The step-by-step decreasing coefficient of the dust removal rate of the electromagnetic field at each stage

According to the above empirical values and the inlet flue gas concentration, the number of electromagnetic fields, the order of the electromagnetic fields and the state of the electromagnetic field, the dust concentration of the outlet flue gas can be calculated.
Note: This model has a certain error. In use of this model, the calculation error should be taken into consideration.

2. Set reasonable intervals for various dimensions of the three types of data

Basic work condition data:

The range of inlet flue gas flow is 2-3 million m3/h, and the precision is 10,000 m3/h.
The range of inlet flue gas concentration is 2000-3000mg/Nm3, and the precision is 50mg/Nm3.
In a specific scene, the number of electromagnetic fields and the order of electromagnetic fields are fixed.

Operational data:

The working state of a single electromagnetic field

The range of the secondary voltage is 0-100%, and the precision is 1%.
The range of secondary current is 80-100A, and the precision is 1A.
The power supply mode is DC power supply/pulse power supply.
Pulse frequency: power supply lasts 10-40ms, with a break of 10-40ms, and the precision is 10ms.

Evaluation data:

Outlet smoke concentration

Constraints:

The outlet smoke concentration is less than the configuration value which is lower than the national emission standard minus the calculation error.

3. Establish an exit condition: the coverage rate of basic work condition data reaches 80% or above.

4. Simulation-based self-learning

In step 1, basic condition data and operational data are generated randomly.
In step 2, the outlet smoke concentration is calculated. If the outlet smoke concentration is less than the configuration value, the basic work condition data, operational data, and objective data are added to the record set.
In step 3, if the coverage rate of the basic work condition data reaches 80% or above, the process goes to step 4; otherwise, the process goes to step 1.
In step 4, the simulation process ends.
It can be seen from the above description of the present invention that, compared with the prior art, a simulation method for generating an operational behavior record set of the present invention have the following advantages.

1. This method does not rely on historical knowledge and online training and can solve the problem of few learning samples.

2. This method does not rely on historical knowledge and online training and can reduce the time cost of online training.
3. This method can directly launch a system with complete training, establish an operation experience database with full coverage of work conditions and optimized objectives, and the system can be put into practice immediately once it is online.

The present invention is exemplarily described above in conjunction with the embodiments. Obviously, the specific implementation of the present invention is not limited by the above-mentioned embodiments, as long as various non-substantial improvements made according to the method concept and technical solutions of the present invention are adopted, or the concept and technical solutions of the present invention are directly applied to other occasions without improvement, they all fall within the scope of the present invention.

**Claims**

1. A simulation method for generating an operational behavior record set, comprising:

   establishing an optimization objective calculating model, wherein the model is based on known mapping relationships or association relationships with industry credibility, and evaluation data of optimization objectives are calculated from basic work condition data and operational data, and the evaluation data include values of the optimization objectives or constraining result values;
   setting reasonable intervals for various dimensions of the basic work condition data, the operational data, and the evaluation data, and setting constraints for the basic work condition data, the operational data, and the evaluation data, wherein the constraints include: computable conditions for the evaluation data; constraints among data of various dimensions of the basic work condition data and the operational data; and reasonable ranges of evaluation data limited by the basic conditions; establishing an exit condition;
   generating the basic work condition data and the operational data within reasonable intervals in an exhaustive manner, and calculating evaluation data through the mapping relationships or the association relationships; if the constraints are met and the evaluation data is superior to the evaluation data corresponding to other operational data under the same basic work condition in a record, generating a new operational behavior record; and repeating the above process until the exit condition is established.

2. The simulation method for generating an operational behavior record set according to claim 1, wherein the constraints include compliance constraints, negative lists for operational data, and preconditions for optimization objectives;

   the compliance constraints refer to situations, in the evaluation of various results caused by basic operating condition data and operational data, that violate national standards, affect product quality compliance, and have adverse effects on subsequent processes.
   the negative lists for the operational data refer to dangerous operational behaviors that should be prohibited for reasons of equipment safety and personnel safety;
   the precondition for the optimization objectives refers to reaching the optimization objectives when the preconditions are met.

3. The simulation method for generating an operational behavior record set according to claim 1 or 2, wherein the basic work condition data and the operational data are generated in an exhaustive manner within reasonable intervals, that is, step values are set for various types of basic work condition data and operational data, and the basic work condition data and the operational data are generated in an exhaustive manner; the evaluation data corresponding to each group of basic work condition data and operational data are calculated. If the constraints are met and the evaluation data is superior to the evaluation data corresponding to other operational data under the same basic work condition data in the record, a new operational behavior record is generated.

4. The simulation method for generating an operational behavior record set according to claim 3, wherein the exit condition includes exiting the simulation-based self-learning after completing all-state exhaustion.

5. The simulation method for generating an operational behavior record set according to claim 1 or 2, wherein the basic work condition data and the operational data are generated randomly within reasonable intervals, and evaluation data are calculated through the mapping relationships or the association relationships; if the constraints are met and the evaluation data is superior to the evaluation data corresponding to other operational data under the same basic work condition in the record, a new operational behavior record is generated.

6. The simulation method for generating an operational behavior record set according to claim 5, wherein the exit condition includes a situation where the coverage rate of the basic work conditions reaches a predetermined ratio.

7. A simulation system for generating an operational behavior record set, adopting the simulation method generating an operational behavior record set according to any of claims 1 to 6 and comprising a basic work condition data generating module, an operational data generating module, and a data analysis module, wherein

   the basic work condition data generating module is configured to generate basic work condition data and transmit the basic work condition data to the data analysis module;
   the operational data generating module is configured to generate operational data and transmit the operational data to the data analysis module;
   the data analysis module is pre-stored with: reasonable intervals for various dimensions of the basic work condition data, the operational data, and the evaluation data; constraints for the basic work condition data, the operational data, and the evaluation data; self-learning exit conditions; and mapping relationships of the optimization objectives or association relationships with industry credibility among the basic work condition data, the operational data and the evaluation data.
   the data analysis module is configured to exhaustively or randomly the generate basic work condition data and the operational data within reasonable intervals and calculate the evaluation data through the mapping relationships or the association relationships, and to make a new operational behavior record if the constraints are met and the evaluation data is superior to the evaluation data corresponding to other operational data under the same basic work condition data in the record; and to repeat simulation-based self-learning until the exit condition is established.

8. A simulation device for generating an operational behavior record set, adopting the simulation method for generating an operational behavior record set according to any of claims 1 to 6 and comprising a basic work condition data generating unit, an operational data generating unit, and a data analysis unit, wherein

   the basic work condition data generating unit is configured to generate basic work condition data and transmit the basic work condition data to the data analysis unit;
   the operational data generating unit is configured to generate operational data and transmit the operational data to the data analysis unit;
   the data analysis unit is pre-stored with: reasonable intervals for various dimensions of the basic work condition data, the operational data, and the evaluation data; constraints for the basic work condition data, the operational data, and the evaluation data; self-learning exit conditions; and mapping relationships of the optimization objectives or association relationships with industry credibility among the basic work condition data, the operational data and the evaluation data;
   the data analysis unit is configured to exhaustively or randomly generate basic work condition data and the operational data within reasonable intervals, and calculate the evaluation data through the mapping relationships or the association relationships, and to make a new operational behavior record if the constraints are met and the evaluation data is superior to the evaluation data corresponding to other operational data under the same basic work condition data in the record; and to repeat simulation-based self-learning until the exit condition is established.

**EP 4 095 773 A1**

| | INTERNATIONAL SEARCH REPORT | | International application No. |
|---|---|---|---|
| | | | **PCT/CN2020/086226** |

**A. CLASSIFICATION OF SUBJECT MATTER**

G06Q 10/06(2012.01)i

According to International Patent Classification (IPC) or to both national classification and IPC

**B. FIELDS SEARCHED**

Minimum documentation searched (classification system followed by classification symbols)

G06N,G06F,G06Q

Documentation searched other than minimum documentation to the extent that such documents are included in the fields searched

Electronic data base consulted during the international search (name of data base and, where practicable, search terms used)

WPI, EPODOC, CNPAT, CNKI, IEEE: 仿真, 操作行为记录, 生成, 构造, 增加, 样本, 数据, 案例, 优化, 模型, 函数, 映射, 关联, 约束, 制约, 设置, 区间, 范围, 遍历, 穷举, 枚举, 随机, 长度, 列举, 重复, 迭代, 退出, 离线, 学习, simulation, operational behavior record, generation, construction, augmentation, sample, data, case, optimization, model, function, map, association, constraint, restriction, set, interval, range, traversal, exhaustion, enumeration, randomization, length, repetition, iteration, exit, offline, learning

**C. DOCUMENTS CONSIDERED TO BE RELEVANT**

| Category* | Citation of document, with indication, where appropriate, of the relevant passages | Relevant to claim No. |
|---|---|---|
| X | CN 109609887 A (BEIJING UNITED COATINGS TECHNOLOGIES CO., LTD.) 12 April 2019 (2019-04-12)<br>claims 1-11, description paragraphs [0043]-[0075], figure 1 | 1-8 |
| A | CN 109145352 A (DASSAULT SYSTEMES) 04 January 2019 (2019-01-04)<br>entire document | 1-8 |
| A | CN 105117341 A (UNIVERSITY OF ELECTRONIC SCIENCE AND TECHNOLOGY OF CHINA) 02 December 2015 (2015-12-02)<br>entire document | 1-8 |
| A | CN 108234169 A (BEIJING SIMULATION CENTER) 29 June 2018 (2018-06-29)<br>entire document | 1-8 |
| A | US 2013159208 A1 (SONG, Byung Jun et al.) 20 June 2013 (2013-06-20)<br>entire document | 1-8 |

☐ Further documents are listed in the continuation of Box C.　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **08 October 2020** | **23 October 2020** |

| Name and mailing address of the ISA/CN | Authorized officer |
|---|---|
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/086226**

| Patent document cited in search report | | | Publication date (day/month/year) | Patent family member(s) | | | Publication date (day/month/year) |
|---|---|---|---|---|---|---|---|
| CN | 109609887 | A | 12 April 2019 | None | | | |
| CN | 109145352 | A | 04 January 2019 | US | 2018365565 | A1 | 20 December 2018 |
| | | | | JP | 2019032820 | A | 28 February 2019 |
| | | | | EP | 3416103 | A1 | 19 December 2018 |
| CN | 105117341 | A | 02 December 2015 | None | | | |
| CN | 108234169 | A | 29 June 2018 | None | | | |
| US | 2013159208 | A1 | 20 June 2013 | KR | 20130082774 | A | 22 July 2013 |

Form PCT/ISA/210 (patent family annex) (January 2015)